# EUROPÄISCHE PATENTANMELDUNG

(11) **EP 4 606 736 A1**
(43) Veröffentlichungstag der Anmeldung: **27.08.2025**
(21) Anmeldenummer: 24000153.7
(22) Anmeldetag: 30.12.2024
(51) Int. Cl.: B65G 1/127, B65G 17/42, B65G 35/06

(54) **VERTIKALER PALETTENSPEICHER, INSBESONDERE ZUR VERWENDUNG IM KAROSSERIEBAU DER KFZ-INDUSTRIE**

(30) Priorität: 24.02.2024 DE 102024000600
(71) Anmelder: Olaf und Andre Tünkers GBR, 40880 Ratingen (DE)
(72) Erfinder: Tünkers, Olaf, 40885 Ratingen (DE); Rios, Carlos Fernandes, 08811 Canyellas, Barcelona (ES); Deumal, Marc Samarra, 08757 Corbera de Llobregat (ES)
(74) Vertreter: Maiwald GmbH

(57) **Zusammenfassung**

Die Erfindung betrifft einen vertikalen Palettenspeicher, insbesondere zur Verwendung im Karosseriebau der Kfz-Industrie, zum Fördern und Speichern von Stückgütern. Sowohl an dem nach oben als auch an dem nach unten sich bewegenden Kettentrum sind Paletten in Zwischenstellungen staubar.

## Beschreibung

Die Erfindung betrifft einen vertikalen Palettenspeicher, insbesondere zur Verwendung im Karosseriebau der Kfz-Industrie, mit durch eine umlaufend, motorisch angetriebene Kette oder durch mehrere Ketten bewegten Paletten zum Speichern und Fördern von Stückgütern in vertikaler Richtung in Bezug auf einen Aufstellboden.

### Stand der Technik

Die Anmelderin hat derartige Palettenspeicher bereits angeboten.

### Aufgabe

Der Erfindung liegt die Aufgabe zugrunde, gattungsgemäß vorausgesetzte Palettenspeicher in ihrem Anwendungsbereich erfinderisch weiter auszugestalten.

### Lösung

Die Aufgabe wird erfindungsgemäß bei einem vertikalen Palettenspeicher, insbesondere zur Verwendung im Karosseriebau der Kfz-Industrie, mit durch eine umlaufend, motorisch angetriebene Kette oder durch mehrere Ketten bewegten Palette zum Speichern und Fördern von Stückgütern in vertikaler Richtung in Bezug auf einen Aufstellboden dadurch erfinderisch weiter ausgestaltet, dass die Paletten in vertikaler Richtung in Bezug auf den Aufstellboden nach oben und vertikal entgegengesetzt nach unten bewegten Kettentrümern in Zwischenstellungen aufstaubar sind.

### Einige Vorteile

Ein erfindungsgemäßer vertikaler Palettenspeicher besitzt gegenüber dem Stand der Technik den großen Vorteil, dass eine Entkopplung im Arbeitsfluss zwischen der Beladestation und dem Entladen gegeben ist. Dies wird dadurch erreicht, dass die Paletten an beliebigen Stellen sowohl an dem vertikal nach oben bewegten Kettentrum als auch an dem vertikal nach unten bewegten Kettentrum durch Stopper oder durch gegeneinander Anlaufen von Paletten aufgestaut werden können.

### Weitere erfinderische Ausgestaltungen

Weitere erfinderische Ausgestaltungen sind in den **Patentansprüchen 2** bis **12** beschrieben.

Gemäß **Patentanspruch 2** ist ein vertikaler Palettenspeicher dadurch gekennzeichnet, dass die Kette an den Umkehrstationen über Zahnräder geführt ist und der oberen Umkehrstation ein elektrischer Antriebsmotor zugeordnet ist, der das dort befindliche Zahnrad in eine Drehrichtung antreibt. Der bevorzugt der oberen Umkehrstation zugeordnete Elektromotor treibt die umlaufende Kette nur in eine Richtung an und kann durchgehend betrieben werden, so dass auch die Kettentrümer stets umlaufen, da die Paletten an beliebigen Stellen aufstaubar sind.

Die Ausführungsform nach **Patentanspruch 3** ist dadurch gekennzeichnet, dass ein an der jeweiligen Palette angebrachter Kettenkamm die Kraft der motorisch angetriebenen Kette an die Palette antriebsmäßig überträgt und so die Palette nach oben und nach unten bewegt. Ein Herunterfallen wird dadurch ausgeschlossen.

Die Ausführungsform nach **Patentanspruch 4** ist dadurch gekennzeichnet, dass ein Stopper oder eine andere angehaltene Palette eine nachfolgende Palette stoppt, wobei über einen Nockenmechanismus der Kettenkamm von der Kette trennbar ist, um die betreffende Palette zu stoppen. Der Nockenmechanismus kann automatisch den Kettenkamm von der Antriebskette lösen, so dass die betreffende Palette in ihrer Bewegung stoppt.

Im **Patentanspruch 5** ist ein vertikaler Palettenspeicher dargestellt, der dadurch gekennzeichnet ist, dass die Palette sich integral mit der Kette und dem Nockenmechanismus bewegt und der Kettenkamm über ein Hebelsystem in Bezug auf die Kette beweglich ist. Dies ermöglich eine einfache Konstruktion.

Aus **Patentanspruch 6** ist ein vertikaler Palettenspeicher zu ersehen, bei welchem dem Stoppanschlag ein Anschlagblock zugeordnet ist, der über eine vorgespannte Rückstellfeder den Nockenmechanismus aktiviert und den Kettenkamm in Bezug auf die Kette bewegt.

Bei der Ausführungsform nach **Patentanspruch 7** ist einem Palettenanschlag ein pneumatisch oder elektrisch betätigter Mechanismus zugeordnet mit einem U-förmigen Auslöser, der bedarfsweise die Palette stoppt.

**Patentanspruch 8** zeigt eine vorteilhafte Ausführungsform, die dadurch gekennzeichnet ist, dass an der Palette zwei Kettenräder mit freilaufenden Buchsen angeordnet sind, die die Bewegung der Palette in eine Richtung (Palettenvorschub) ermöglichen, aber in entgegengesetzter Richtung eine Bewegung blockieren, derart, dass dem Palettenspeicher ein Rahmen zugeordnet ist, dem jeweils sich in Achsrichtung dieser Rahmen sich erstreckende Kettenabschnitte zugeordnet sind, mit denen die irreversiblen Kettenräder kämmen und mit den Kettenabschnitten ein Verrieglungssystem bilden.

Besonders vorteilhaft ist auch eine Ausführungsform nach **Patentanspruch 9,** die dadurch gekennzeichnet ist, dass den Kettenrädern mit Rücklaufsperre für die vertikale Hubrichtung jeweils eine Freilaufbuchse zugeordnet ist, die die Drehung in eine der beiden Richtungen blockiert.

Es hat sich als zweckmäßig erwiesen, dass sowohl die die Paletten antreibende Kette als auch die Kettenabschnitte als Gliederketten, Laschenketten oder Galsche Ketten ausgebildet sind - **Patentanspruch 10.**

Bedarfsweise können gemäß **Patentanspruch 11** mehrere vertikale Palettenspeicher neben- und/oder hintereinander angeordnet sein.

Eine besonders vorteilhafte Ausführungsform ist in **Patentanspruch 12** beschrieben, bei welcher die nach oben bewegten Paletten mit Stückgütern beladbar sind, während die abwärts geförderten Paletten von einem Roboter entladbar sind.

In der Zeichnung ist die Erfindung - teils schematisch - an einem Ausführungsbeispiel veranschaulicht. Es zeigen:
- Fig. 1: Einen vertikalen Palettenspeicher in perspektivischer Darstellung;
- Fig. 2: einen vertikalen Palettenspeicher im Zusammenwirken mit einem Roboter:
- Fig. 3: eine Einzelheit des in Fig. 1 dargestellten Palettenspeichers, ebenfalls in perspektivischer Darstellung;
- Fig. 4: eine Einzelheit aus Fig. 1, in perspektivischer Darstellung;
- Fig. 5: eine Einzelheit aus Fig. 1 im größeren Maßstab;
- Fig. 6: eine Einzelheit aus Fig. 1, wobei eine Palette in Bewegung dargestellt ist, teils in perspektivischer Darstellung und sich die Palette im Aufwärtsbereich befindet;
- Fig. 7: die Palette aus Fig. 6 beim Stillstand;
- Fig. 8: eine Einzelheit aus Fig. 1, Palette in Bewegung;
- Fig. 9: eine Einzelheit aus Fig. 1 im größeren Maßstab, mit Palettenstopp, Nockenmechanismus und Kettenkamm;
- Fig. 10: eine Einzelheit aus Fig. 1 bei Palettenstopp, Palette in Stillstand, teils perspektivisch dargestellt;
- Fig. 11: eine Einzelheit aus Fig. 1 im größeren Maßstab mit Anschlagblock, aktiver Stopp für Paletten, Nockenmechanismus aktiviert und Kettenkamm außer Eingriff mit dem Kettenstrang;
- Fig. 12: Palette in Vorwärtsbewegung nach oben in perspektivischer Darstellung;
- Fig. 13: eine Einzelheit aus Fig. 1 mit Palettenanschlag mit U-Auslöser, pneumatischem Zylinder und Stopperaufnahme;
- Fig. 14: eine Einzelheit aus Fig. 1, Auslöser inaktiv, Palettendurchgang;
- Fig. 15: Auslöser aktiv, Palettenstopp;
- Fig. 16: Kettenräder mit Freilaufbuchse in perspektivischer Darstellung;
- Fig. 17: Rückwärtsgang mit Sperrritzel im Aufwärtsbereich;
- Fig. 18: Palette in Abwärtsbewegung nach unten, teils perspektivisch dargestellt, und

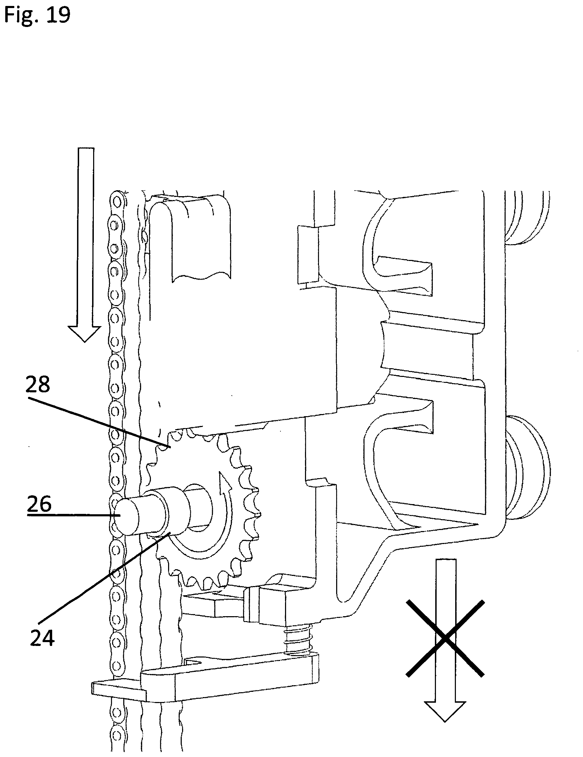

- Fig. 19: der Abwärtsbereich, wobei Kettenräder mit Rücklaufsperren versehen sind.

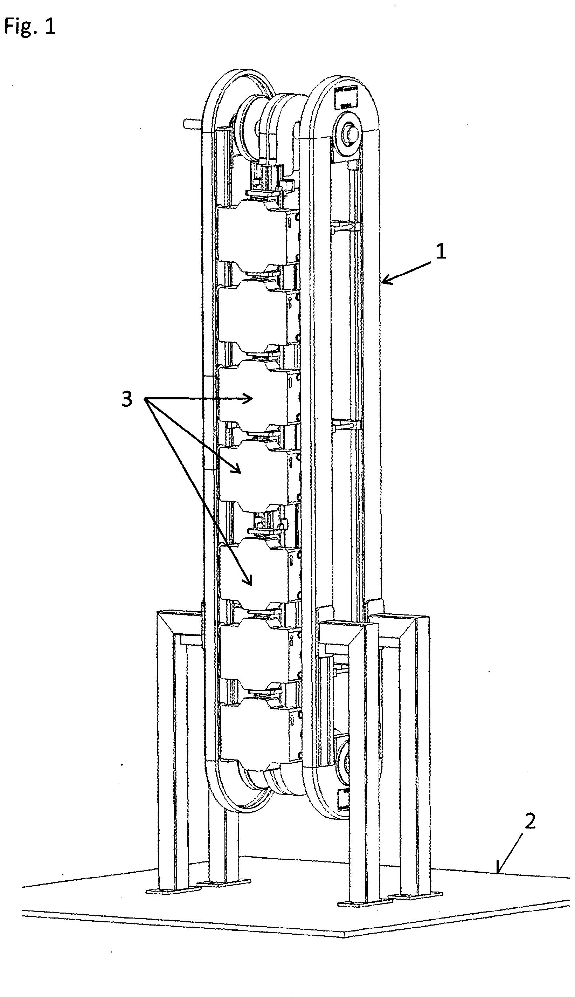

Aus Fig. 1 ist ein vertikaler Palettenspeicher 1 ersichtlich, der senkrecht zum Aufstellboden 2 Paletten 3 in aufsteigender Richtung auf der einen Seite und Paletten 3 in absteigender Richtung senkrecht zum Aufstellboden 2 nach unten sammelt.

Die Paletten 3 werden durch einen weiter unten noch im Einzelnen beschriebenen motorisch angetriebenen Kettenstrang bewegt.

Die Paletten 3 dienen zum Aufnehmen von Stückgütern, zum Beispiel von Einzelteilen im Karosseriebau der Kfz-Industrie. Die Paletten 3 können mittels elektrischer oder pneumatischer Stopper sowohl in aufsteigender Richtung als auch während ihrer Bewegung nach unten an beliebigen Positionen gestoppt werden.

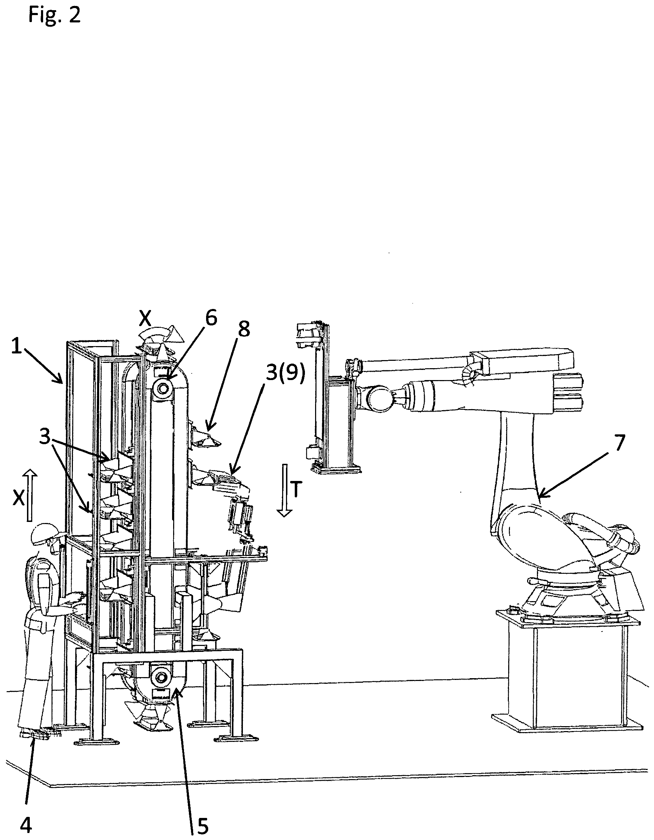

Wie man aus Fig. 2 erkennt, ermöglicht der vertikale Palettenspeicher 1 eine Entkopplung während des Arbeitsflusses.

Die Paletten 3 werden bei der aus Fig. 2 ersichtlichen Ausführungsform durch eine Bedienungsperson 4 mit den herangeführten Stückgütern beladen und dann in Richtung X über Umkehrstationen 5 und 6 bewegt.

Die Bewegungsrichtung nach oben ist durch den Pfeil X und die Abwärtsbewegung der Paletten 3 durch den Pfeil T in der linken Darstellung der Fig. 1 angedeutet.

Ein Roboter 7 entlädt Paletten 3 im Abwärtsbereich T.

Der Warenfluss nach dem Roboter 7 ist nicht dargestellt.

Hier können zum Beispiel mannlose Fahrzeuge mit den Stückgütern, zum Beispiel Teile von Karosserien in der Kfz-Industrie, beladen werden.

Auch auf der Beladeseite im Bereich X können die Teile durch mannlose Fahrzeuge herangeführt werden. Es ist auch möglich, die Bedienungsperson 4 durch einen Roboter zu ersetzen, der die herangeführten Stückgüter entnimmt und auf die Paletten 3 lädt. Die beladenen Paletten 3 im Bereich X können zum Beispiel im Bereich 8 auf ihre Entladung warten, bis sie im Bereich 9 vom Roboter 7 entladen werden.

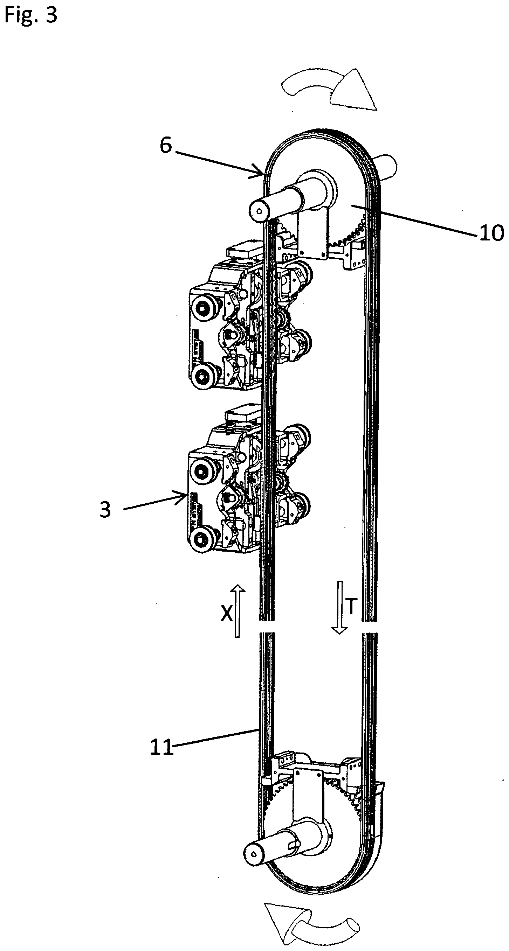

Aus Fig. 3 ist ein vertikaler Palettenspeicher 1 im allgemeinen Betrieb zu sehen. Ein im Einzelnen nicht dargestellter Elektromotor in der als Antriebskopf ausgebildeten Umkehrstation 6 treibt ein Zahnrad 10 an, das seinerseits eine Kette 11 in Richtung X - T als endlosen Kettenstrang in eine Richtung antreibt. Durch die Bewegung der Kette 11 werden die Paletten 3 in Richtung X bzw. T angetrieben. Der Motor in der Umkehrstation 6 und damit die Kette 11 können ständig arbeiten, wobei sich die vertikalen Trümer der Kette 11 ständig in Richtung X bzw. T umlaufend bewegen.

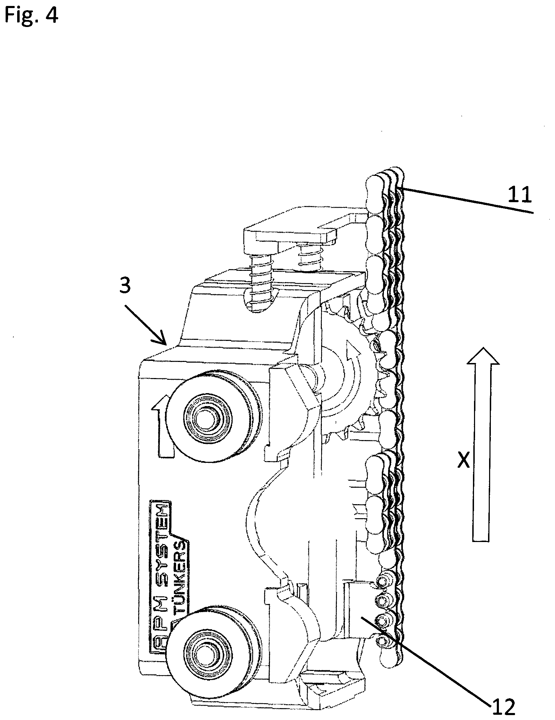

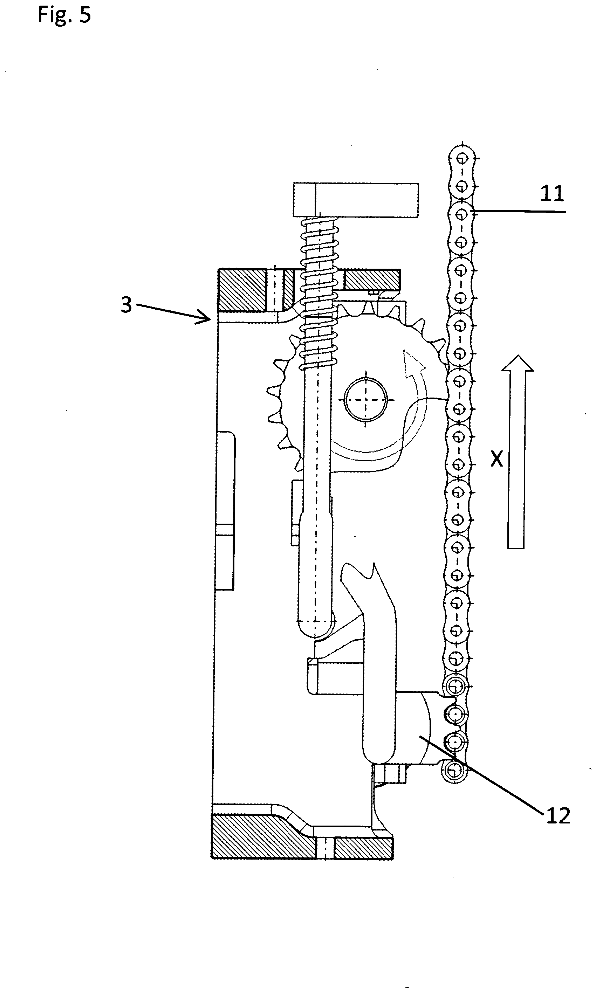

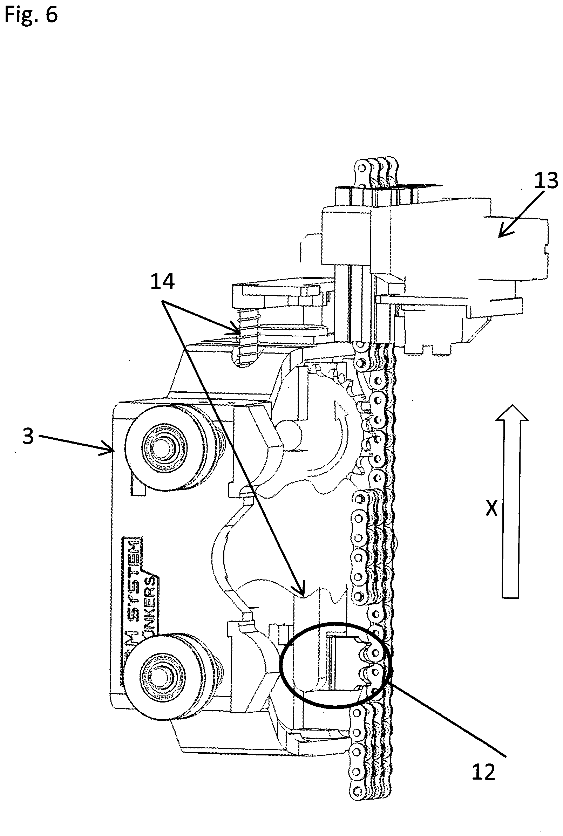

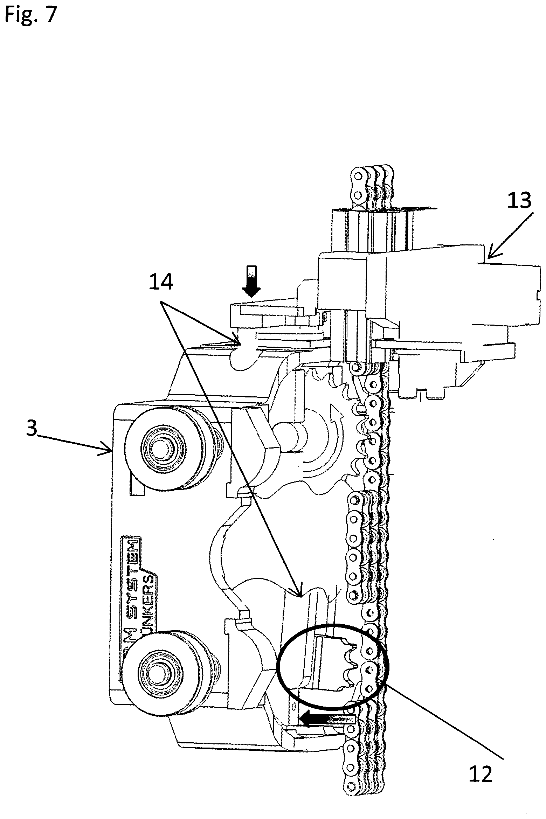

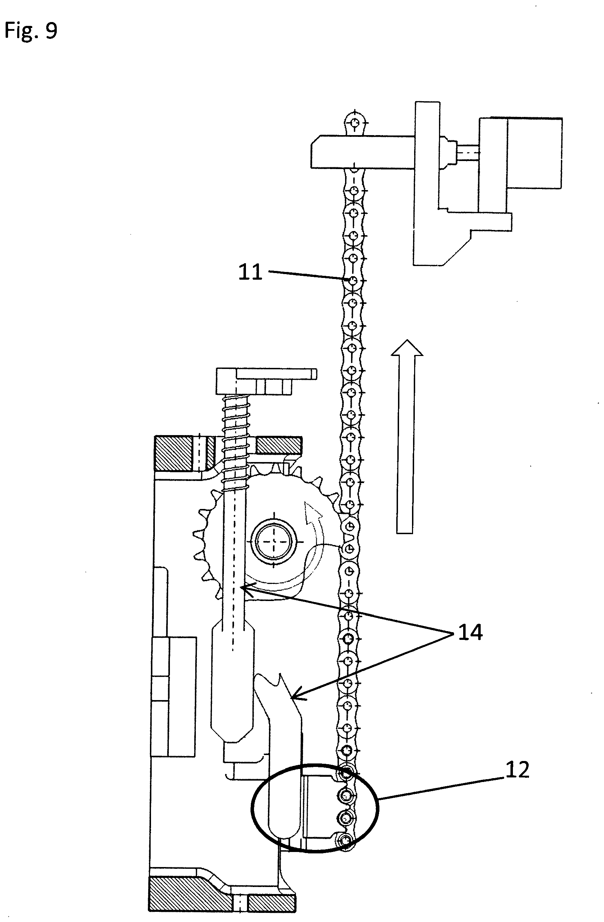

Die Fig. 4 und 5 zeigen einen an einer Palette 3 angebrachten Kettenkamm 12, der die Kraft der Kette 11 an die Palette 3 überträgt und so die Palette 3 in Richtung X bzw. T (Fig. 3) nach oben und nach unten bewegt. Aus Fig. 6 ist die Palette 3 in Bewegung dargestellt. Wenn die Palette 3 einen Stopper 13 oder eine andere angehaltene Palette 3 erreicht, wird über ein Nockenmechanismus 14 der Kettenkamm 12 (Fig. 9) von der Kette 11 getrennt. In diesem Moment bleibt die Palette 3 stehen. Die Stillstandposition der Palette 3 ist aus Fig. 7 ersichtlich.

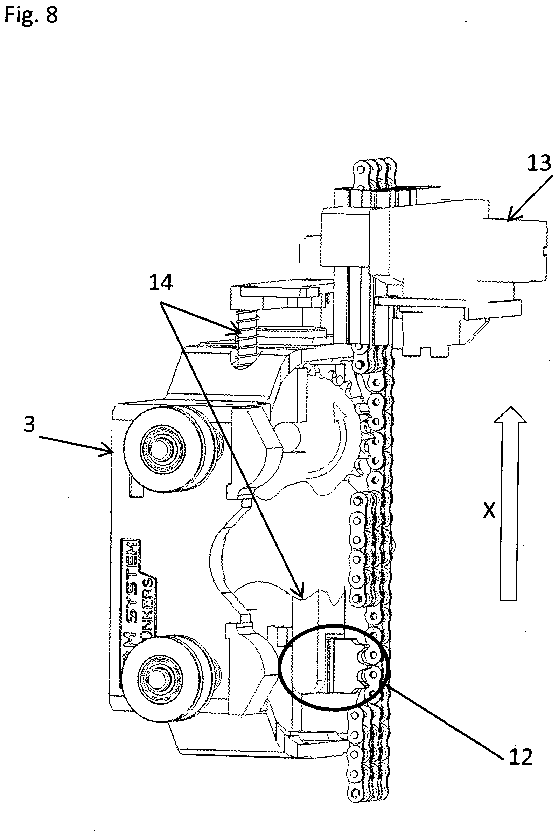

Wie man aus Fig. 8 erkennt, bewegt sich die Palette 3 integral mit der Kette 11 über den Nockenmechanismus 14. Der Kettenkamm 12 verbindet die Palette 3 dann mit der Kette 11.

Aus Fig. 9 ist der Nockenmechanismus 14 deutlicher zu erkennen. Der Kettenkamm 12 ist über ein Hebelsystem mit dem Nockenmechanismus 14 verbunden und wird beim Schwenken des Nockenmechanismus 14 in der Stoppposition von der Kette 11 getrennt.

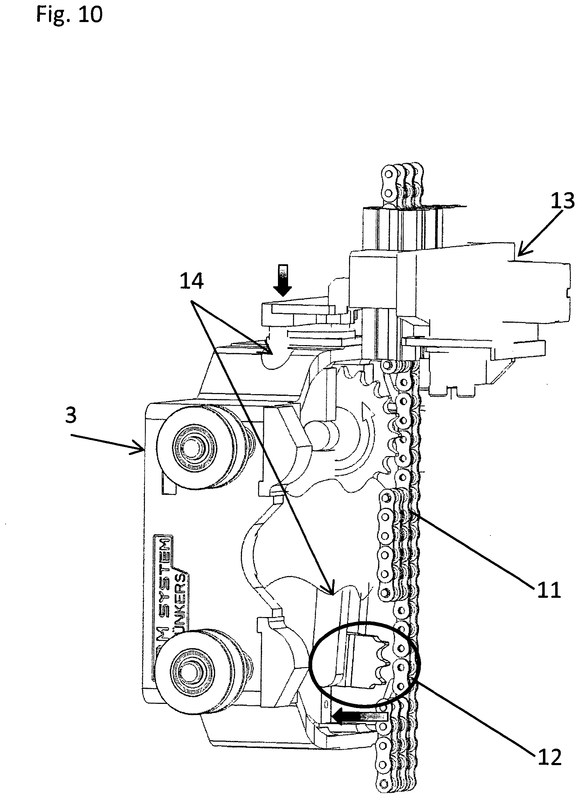

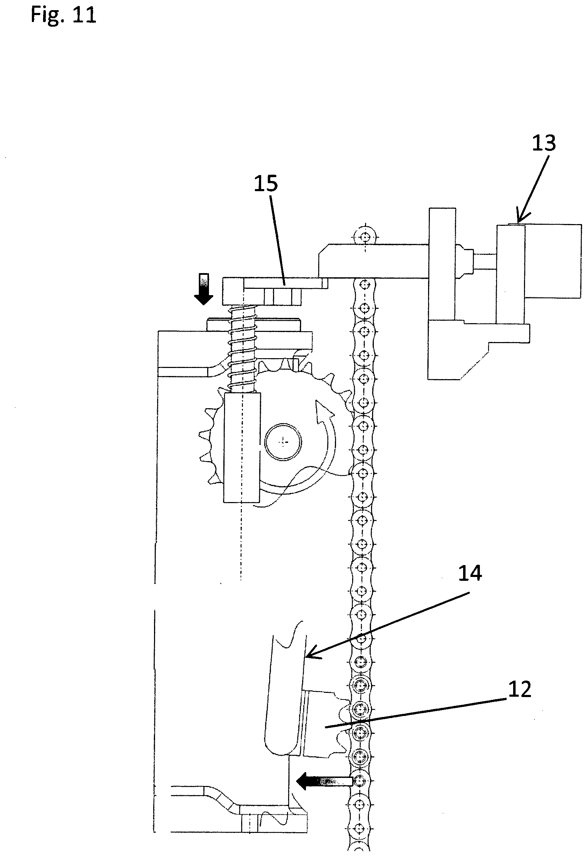

In Fig. 10 ist eine Palette 3 im Stillstand dargestellt. Der Stopper 13 drückt den Anschlagblock gegen eine Druckfeder der Palette 3 zusammen. Durch diese Kompression wird der Nockenmechanismus 14 aktiviert und der Kettenkamm 12 von der Kette 11 getrennt, wie vorstehend im Zusammenhang mit Fig. 9 beschrieben wird. Die Palette 3 kommt dann zum Stillstand. Diese Situation ist in Fig. 11 noch einmal deutlich dargestellt. Der Anschlagblock ist in Fig. 1 mit dem Bezugszeichen 15 bezeichnet.

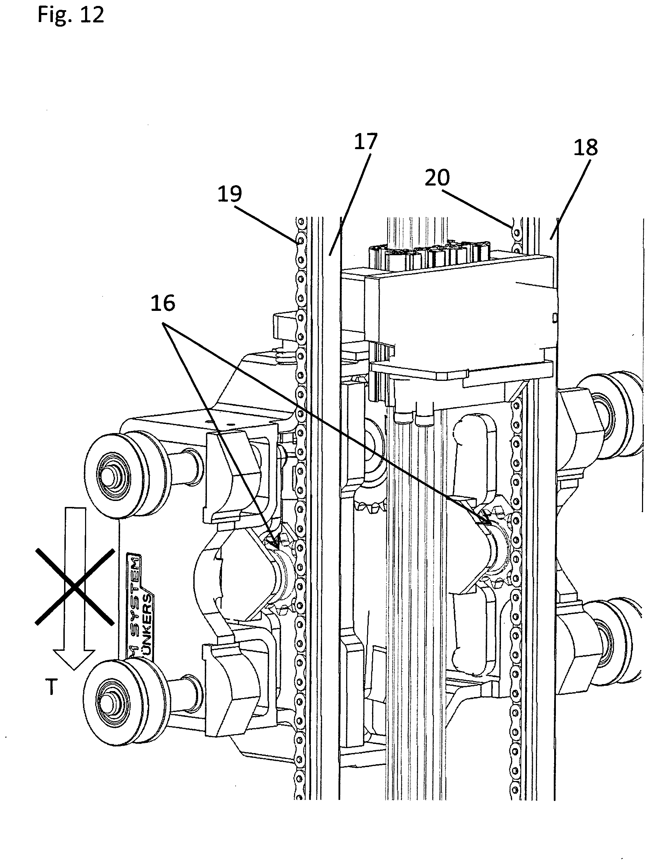

In Fig. 12 ist die Bewegung einer Palette 3 in Aufwärtsbewegung dargestellt. Deutlich erkennt man die beiden parallel und mit Abstand zueinander angeordneten Kettentrümer.

Um die Position einer Palette 3 nach dem Stillstand beizubehalten und ein Herunterfallen zu verhindern, ist ein Verriegelungssystem vorgesehen. An der Palette 3 sind zwei Kettenräder mit freilaufenden Buchsen 16 angebracht. Diese Kettenräder ermöglichen die Bewegung der Palette 3 in eine Richtung (Palettenvorschub), aber sie blockieren in die entgegengesetzte Richtung. Um diese Blockierung zu erreichen, sind an zwei festen Rahmen 17 und 18 zwei feste Kettenabschnitte 19 und 20 angeordnet, auf denen sich diese irreversiblen Kettenräder kämmend bewegen.

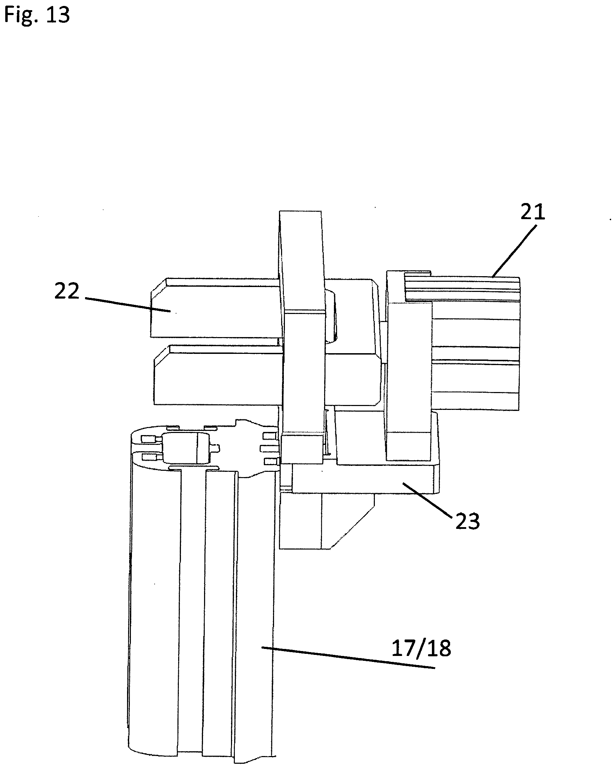

Wie aus Fig. 13 ersichtlich ist, ist dem Palettenanschlag ein pneumatisch betriebener Mechanismus mit einem pneumatischen Zylinder 21 zugeordnet. Der Palettenanschlag kann aber auch elektrisch betrieben werden. Dem Palettenanschlag ist weiterhin ein U-förmiger Auslöser 22 zugeordnet. Dieser Auslöser 22 stoppt den Vorschub der Paletten 3 im Bedarfsfalle. Bei 23 ist eine Stopperaufnahme gezeigt.

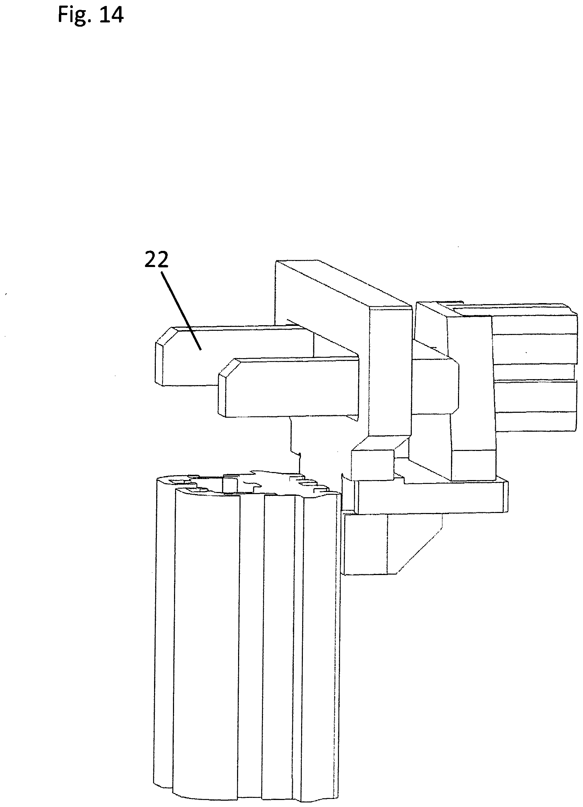

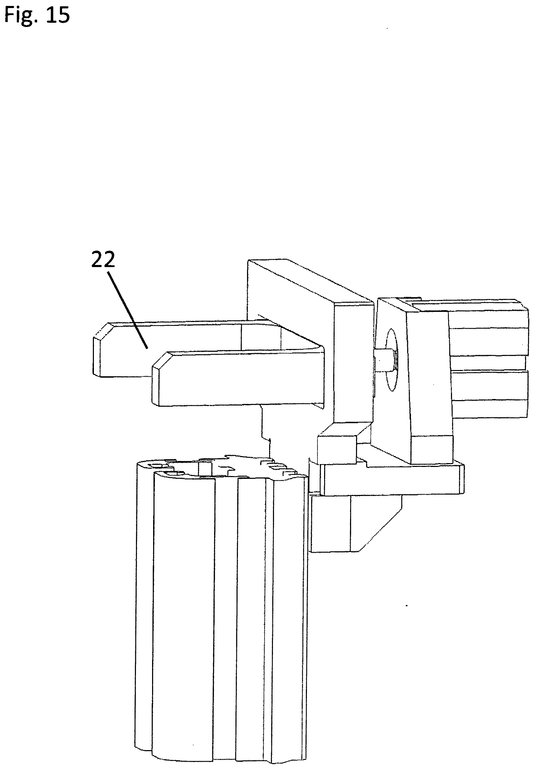

In Fig. 14 ist der U-förmige Auslöser 22 beim Palettendurchgang dargestellt und in Fig. 15 der Palettenstopp.

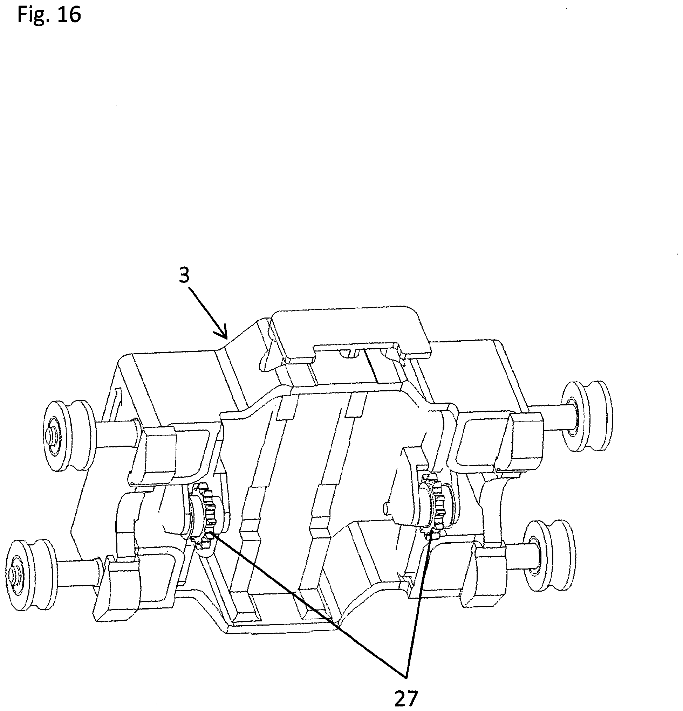

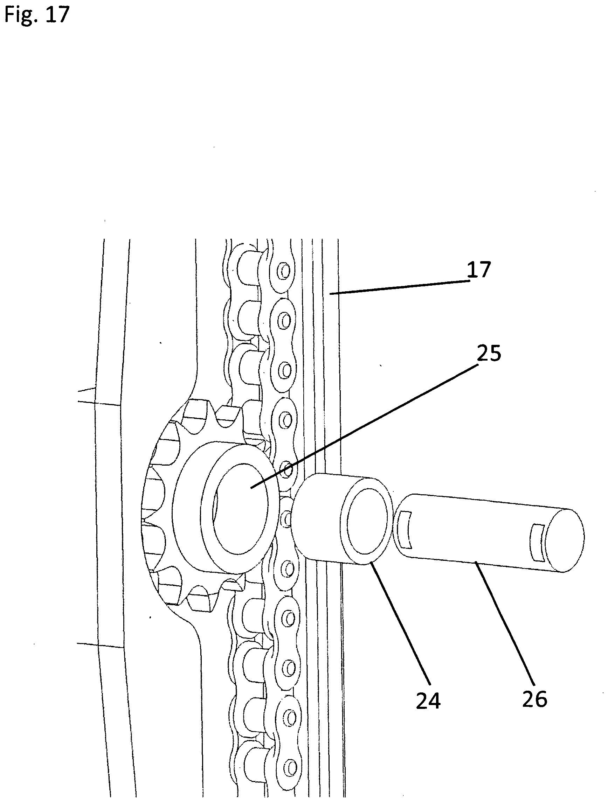

Freilaufbuchsen 24 sind aus Fig. 17 zu erkennen und auch ein Ritzel 25, das mit einem Kettenabschnitt kämmt. Mit 26 ist eine Achse bezeichnet. Kettenräder 27 sind aus der perspektivischen Darstellung in Fig. 16 zu erkennen.

Die Freilaufbuchsen 24 sind im Inneren der Ritzel 25 auf der Achse 26 montiert. Die Freilaufbuchsen 24 ermöglichen eine Drehung in eine Richtung, während sie in eine andere Richtung blockieren.

Die Ritzel 25 dienen somit als Sperrritzel, insbesondere im Abwärtsbereich.

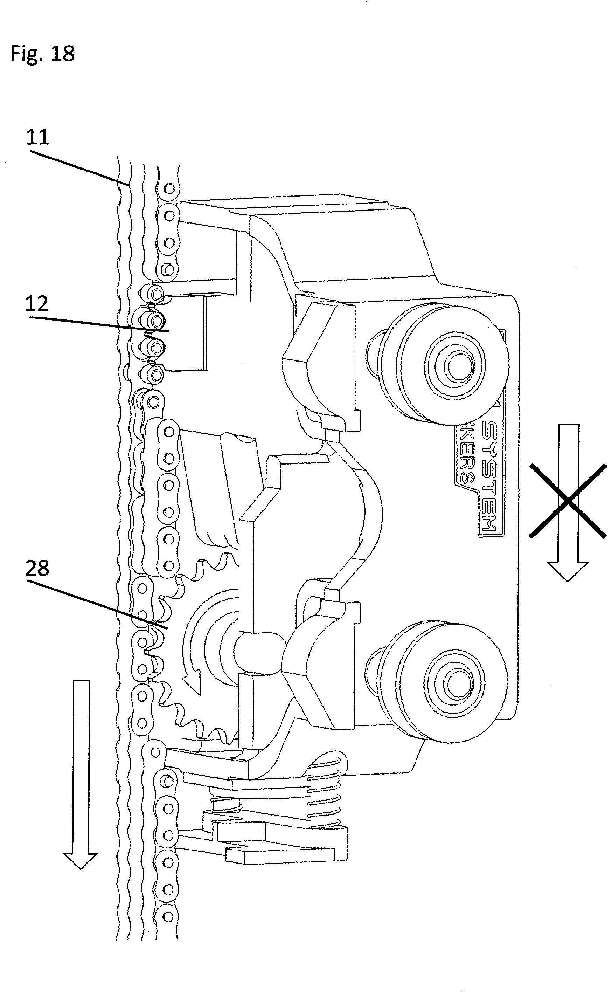

Fig. 18 zeigt die Bewegung der Paletten 3 in Richtung T, also nach unten. Im Abwärtsbereich halten die Paletten 3 ihre Position sicher durch ein freilaufendes Ritzel 28. Die Drehung des Ritzels - in diesem Fall im Uhrzeigersinn - blockiert den freien Fall der Palette 3 aufgrund des Eigengewichts. Das Kettenrad ist auf dem Kettenkamm 12 ausgerichtet.

Die in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Palettenspeicher, vertikaler
- 2: Aufstellboden
- 3: Palette
- 4: Bedienungsperson
- 5: Umkehrstation
- 6: "
- 7: Roboter
- 8: Bereich
- 9: "
- 10: Zahnrad
- 11: Kette
- 12: Kettenkamm
- 13: Stopper
- 14: Nockenmechanismus
- 15: Anschlagblock
- 16: Buchse
- 17: Rahmen
- 18: "
- 19: Kettenabschnitt
- 20: "
- 21: Zylinder, pneumatischer
- 22: Auslöser, U-förmig
- 23: Stopperaufnahme
- 24: Freilaufbuchsen
- 25: Ritzel
- 26: Achse
- 27: Kettenrad
- 28: Ritzel, freilaufendes

- X: Bewegungsrichtung nach oben
- T: Bewegungsrichtung nach unten

## Patentansprüche

1. Vertikaler Palettenspeicher (1), insbesondere zur Verwendung im Karosseriebau der Kfz-Industrie, mit durch eine umlaufend, motorisch angetriebene Kette (11) oder durch mehrere Ketten bewegten Paletten (3) zum Speichern und Fördern von Stückgütern in vertikaler Richtung (X bzw. T) in Bezug auf den Aufstellboden (2), **dadurch gekennzeichnet, dass** die Paletten (3) an in Bezug auf den Aufstellboden (2) vertikal nach oben (X) und entgegengesetzt vertikal nach unten (T) bewegten Kettentrümern in Zwischenstellungen aufstaubar sind.

2. Vertikaler Palettenspeicher nach Anspruch 1, **dadurch gekennzeichnet, dass** die Kette (11) an den Umkehrstationen (5, 6) über Zahnräder (10) geführt ist und der oberen Umkehrstation (5) ein elektrischer Antriebsmotor zugeordnet ist, der das dort befindliche Zahnrad (10) in eine Drehrichtung (X) antreibt.

3. Vertikaler Palettenspeicher nach Anspruch 1 oder 2, **dadurch gekennzeichnet, dass** ein an der jeweiligen Palette (3) angebrachter Kettenkamm (12) die Kraft der motorisch angetriebenen Kette (11) an die Palette (3) antriebsmäßig überträgt und so die Palette (3) nach oben (X) und nach unten (T) bewegt.

4. Vertikaler Palettenspeicher nach Anspruch 1 oder einem der darauffolgenden Ansprüche, **dadurch gekennzeichnet, dass** ein Stopper (13) oder eine andere angehaltene Palette (3) eine nachfolgende Palette (3) stoppt, wobei über einen Nockenmechanismus (14) der Kettenkamm (12) von der Kette (11) trennbar ist, um die betreffende Palette (3) zu stoppen.

5. Vertikaler Palettenspeicher nach Anspruch 1 oder einem der darauffolgenden Ansprüche, **dadurch gekennzeichnet, dass** die Palette (3) sich integral mit der Kette (11) und dem Nockenmechanismus (14) bewegt und der Kettenkamm (12) über ein Hebelsystem in Bezug auf die Kette (11) beweglich ist.

6. Vertikaler Palettenspeicher nach Anspruch 1 oder einem der darauffolgenden Ansprüche, **dadurch gekennzeichnet, dass** dem Stopperanschlag ein Anschlagblock (15) zugeordnet ist, der über eine vorgespannte Rückstellfeder den Nockenmechanismus (14) aktiviert und den Kettenkamm (12) in Bezug auf die Kette (11) bewegt.

7. Vertikaler Palettenspeicher nach Anspruch 1 oder einem der darauffolgenden Ansprüche, **dadurch gekennzeichnet, dass** einem Palettenanschlag ein pneumatisch oder elektrisch betätigter Mechanismus zugeordnet ist mit einem U-förmigen Auslöser (22), der bedarfsweise die Palette (3) stoppt.

8. Vertikaler Palettenspeicher nach Anspruch 1 oder einem der darauffolgenden Ansprüche, **dadurch gekennzeichnet, dass** an der Palette (3) zwei Kettenräder mit freilaufenden Buchsen angeordnet sind, die die Bewegung der Palette (3) in eine Richtung (Palettenvorschub) ermöglichen, aber in entgegengesetzter Richtung eine Bewegung blockieren, derart, dass dem Palettenspeicher (1) ein Rahmen (17, 18) zugeordnet ist, dem jeweils sich in Achsrichtung dieser Rahmen (17, 18) sich erstreckende Kettenabschnitte (19, 20) zugeordnet sind, mit denen die irreversiblen Kettenräder kämmen und mit den Kettenabschnitten (19, 20) ein Verrieglungssystem bilden.

9. Vertikaler Palettenspeicher nach Anspruch 1 oder einem der darauffolgenden Ansprüche, **dadurch gekennzeichnet, dass** den Kettenrädern mit Rücklaufsperre für die vertikale Hubrichtung jeweils eine Freilaufbuchse (24) zugeordnet ist, die die Drehung in eine der beiden Richtungen blockiert.

10. Vertikaler Palettenspeicher nach Anspruch 1 oder einem der darauffolgenden Ansprüche, **dadurch gekennzeichnet, dass** sowohl die die Paletten (3) antreibende Kette (11) als auch die Kettenabschnitte (19, 20) als Gliederketten, Laschenketten oder Gallsche Ketten ausgebildet sind.

11. Vertikaler Palettenspeicher nach Anspruch 1 oder einem der darauffolgenden Ansprüche, **dadurch gekennzeichnet, dass** mehrere vertikale Palettenspeicher (1) neben- und/oder hintereinander angeordnet sind.

12. Vertikaler Palettenspeicher nach Anspruch 1 oder einem der darauffolgenden Ansprüche, **dadurch gekennzeichnet, dass** die nach oben (X) bewegten Paletten (3) mit Stückgütern beladbar sind, während die abwärts geförderten Paletten (3) von einem Roboter (7) entladbar sind.
